(19) Europäisches Patentamt
European Patent Office
Office européen des brevets

(11) Numéro de publication: **0 128 060**
**B1**

# (12) FASCICULE DE BREVET EUROPÉEN

(45) Date de publication du fascicule du brevet: **16.12.87**

(51) Int. Cl.⁴: **C 08 G 18/42**, C 08 G 63/12

(21) Numéro de dépôt: **84400880.5**

(22) Date de dépôt: **02.05.84**

(54) **Procédé de préparation de polyols.**

(30) Priorité: **04.05.83 CA 427364**

(43) Date de publication de la demande: **12.12.84 Bulletin 84/50**

(45) Mention de la délivrance du brevet: **16.12.87 Bulletin 87/51**

(84) Etats contractants désignés: **BE CH DE FR GB IT LI NL**

(56) Documents cité:
**EP-A-0 004 617**
**EP-A-0 044 969**
**GB-A-1 475 541**
**GB-A-2 021 602**

(73) Titulaire: **CENTRE DE RECHERCHE INDUSTRIELLE DU QUEBEC, 333 Rue Franquet, Ste- Foy Quebec, G1V 4C7 (CA)**

(72) Inventeur: **Altounian, George Napoléon, 961 Rue Guillaume Boisset, Cap Rouge Québec (CA)**

(74) Mandataire: **CABINET BONNET- THIRION, 95 Boulevard Beaumarchais, F-75003 Paris (FR)**

**EP 0 128 060 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

**Description**

Il est bien connu de préparer des polyols en faisant réagir des acides polycarboxyliques, leurs anhydrides ou esters (transestérification ou polycondensation) avec des alcools polyhydriques en présence d'un catalyseur choisi parmi les chlorures stannique et stanneux et les alkyl-étain. En général, ces réactions sont effectuées à des températures variant entre 130°C et 240°C pendant un temps de réaction qui est de l'ordre de 12 à 16 heures.

Les réactifs employés pour la réalisation de ce procédé connu sont les acides polycarboxyliques, leurs anhydrides ainsi que leurs esters de même que les alcools polyhydriques. Parmi les acides polycarboxyliques employés, on peut mentionner à titre d'exemples, les acides oxalique, malonique, succinique, glutarique, adipique, pimelique, subérique, azélaïque sébacique, brassydique, thapsique, maléique, fumarique, glutaconique, alpha-hydromuconique, bêta-hydromuconique, alpha-butyl, alpha-éthyl-glutarique, alpha-bêta-diéthyl succinique, isophtalique, téréphtalique, hemimellitique et 1,4-cyclohexanedicarboxylique.

Parmi les alcools polyhydriques, on peut employer tout alcool convenable soit aliphatique, soit aromatique. On peut mentionner à titre d'exemples, les polyalcools suivants: éthylène glycol, diethylène glycol, triéthylène glycol, tétraéthylène glycol, propylène glycol, dipropylène glycol, triméthylène glycol, 1,2-propylène glycol, 1,4-tétraméthylène glycol, butylène glycol, 1,2-butylène glycol, 1,4-butane diol, 1,3-butane diol, 1,5-pentane diol, 1,4-pentane diol, 1,3-pentane diol, 1,6-hexane diol, 1,7-heptane diol, glycérol, 1,1,1-trimethylol propane, 1,1,1-triméthyloléthane, hexane-1,2,6-triol, néopentylglycol, dibromonéopentylglycol, 1,10-décanediol, 2,2-bis(4-hydroxycyclohexyl) propane, triéthyloléthane, triéthanolamine et le pentaérythritol.

Ce procédé met particulièrement en lumière l'utilisation de deux étapes lors de la réaction de l'acide ou de l'ester dibasique avec divers alcools polyfonctionnels. Dans la première étape, l'acide ou l'ester dibasique réagit avec des alcools où la fonction "hydroxyl" est peu disponible, tels que les alcools secondaires ou tertiaires ou des alcools primaires fortement encombrés. Par la suite, des alcools plus réactifs tels que des alcools primaires sont ajoutés au mélange réactionnel.

Un des problèmes rencontrés lors de la préparation d'ester polyols est le dégagement d'eau lors de la polycondensation de l'acide dibasique avec les alcools:

$$2\ R'\text{-}OH + HOCO\text{-}R\text{-}COOH \rightleftharpoons R'OCO\text{-}R\text{-}COOR' + 2\ H_2O$$

(POLYCONDENSATION)

ou le dégagement de méthanol lors de la transestérification de l'ester dibasique avec les alcools:

$$2\ R'\text{-}OH + H_3COCO\text{-}R\text{-}COOCH_3 \rightleftharpoons R'OCO\text{-}R\text{-}COOR' + 2\ CH_3OH.$$

La polycondensation et la transestérification sont des réactions d'équilibre. Afin de favoriser la formation d'esters polyols, in est nécessaire d'éliminer, par distillation, l'eau ou le méthanol formé si on désire que la réaction soit complète. Il est à remarquer que la quantité d'eau ou de méthanol dégagé permet de suivre l'évolution de la réaction en cours.

Dans la littérature scientifique, par exemple, le brevet canadien no 833.590 décrit la préparation d'un polyester polyol par réaction d'un polyol avec un ester d'un acide dicarboxylique (acide adipique) en présence d'un catalyseur qui est le produit de la réaction entre l'oxyde dialkyl d'étain et un composé de titane. L'exemple 3 décrit la préparation d'un polyol catalysé à partir de l'oxyde dibutyl d'étain et du titane de 2-éthyl hexyl. D'autre part, le brevet canadien 1.035.895 (équivalent du brevet américain no 3.888.908) décrit des polyesters polyols préparés à partir d'un acide dicarboxylique, de l'anhydride d'un acide carboxylique, d'un dialcool et d'un trialcool.

Le brevet canadien no 1.059.529 (équivalent du brevet américain no 4.018.815) divulgue la préparation d'un polyester polyol par estérification d'un acide polycarboxylique avec un polyalcool caractérisée en ce que l'alcool est ajouté en deux étapes. L'acide peut être l'acide adipique et l'alcool peut être l'éthylène glycol, le diéthylène glycol, le 1,4-butane diol et des mélanges de ceux-ci. Un catalyseur conventionnel peut être ajouté dans la dernière étape du procédé.

Le brevet canadien no 1.093.571 (équivalent du brevet américain no 4.096.129) se rapporte à des polyesters polyols préparés à partir d'esters de l'acide glutarique et de l'acide adipique.

Enfin, les brevets suivants ne sont pas considérés pertinents, mais sont mentionnés à titre documentaire:

brevet canadien 595.272
brevet canadien 677.430
brevet canadien 847.334
brevet canadien 927.042
brevet canadien 1.035.895
brevet canadien 1.070.450
brevet canadien 1.095.534
brevet américain 3.647.759
brevet américain 4.237.238

On sait d'autre part qu'il existe des mélanges facilement accessibles d'acides dibarboxyliques, qui n'ont pratiquement pas trouvés de débouchés conmerciaux. Par exemple, mentionnons ceux renfermant de l'acide glutarique, de l'acide succinique et de l'acide adipique. Il suffit de souligner à titre d'exemple le mélange d'acides-dicarboxyliques, d'esters ou d'anhydrides, qui provient de résidus traités résultant de la production industrielle d'acide adipique. Ce mélange comprend habituellement environ 50 à 70% en poids d'acide glutarique, environ 15 à 30% en poids d'acide succinique et environ 10 à 20 % en poids d'acide adipique, ou les esters ou anhydrides de ces acides. Dans certains cas, ce mélange peut même comprendre environ 35 à 80 % en poids d'acide glutarque, environ 15 à 35 % en poids d'acide succinique et environ 8 à 35 % en poids d'acide adipique ou les esters ou anhydrides de ces acides.

Les ester polyols préparés à partir d'un mélange comprenant les acides glutarique, succinique et adipique sont décrits dans les brevets GB-A-1 475 541, GB-A-2 021 602, EP-A-0 004 617 et EP-A-0 044 969.

Or il a été trouvé qu'il est avantageux d'utiliser comme substances de départ, de tels mélanges d'acides dicarboxyliques et particulièrement ceux provenant de résidus traités résultant de la production d'acide adipique. En effet, l'utilisation de ces mélanges d'acides dans un procédé de préparation de polyols donne des produits caractérisés par un nombre hydroxyle inférieur à 600, une valeur acide inférieure à 3 et une fonctionalité hydroxylique au moins égale à 2,0.

Quant aux uréthannes que l'on peut obtenir à partir des polyols selon la présente invention, ils sont particulièrement intéressants, par exemple sous forme d'élastomères possédant une dureté minimale Shore D de 60. Sous forme de mousse, ils ont une densité d'environ 1000 à 21 $kg/m^3$ et dont la stabilité dimensionnelle de pourcentage d'expansion de masse varie entre 0,05 et 0,20% à 72° C et 96,5% d'humidité après une semaine, pour les mousses d'environ 32,0 à 21 $kg/m^3$ de densité.

Dans son sens le plus large l'invention concerne un procédé de préparation de polyols, caractérisé en ce que l'on fait réagir un mélange d'acides dicarboxyliques comprenant de l'acide glutarique, de l'acide succinique et de l'acide adipique, leurs esters ou anhydrides sur au moins un alcool polyhydrique de façon à obtenir des polyols.

On peut par exemple utiliser un mélange d'acides comprenant environ 50 à 70 % en poids d'acide glutarique, environ 15 à 30 % en poids d'acide succinique et environ 10 à 20 % en poids d'acide adipique, ou les esters ou anhydrides de ces acides. De préference, on utilise le mélange d'acide provenant de résidus traités résultant de la production industrielle d'acide adipique. Ces mélanges sont connus dans le commerce sous les dénominations DBA (dibasic acids) et DBB (dibasic esters). On peut même aussi utiliser un mélange d'acides comprenant environ 35 à 80 % en poids d'acides glutarique, environ 15 à 35 % en poids d'acide succinique et environ 8 à 35 % en poids d'acide adipique ou les esters ou anhydrides de ces acides.

La réaction s'effectue habituellement en présence d'un catalyseur, notamment choisi parmi les chlorures stanniques et stanneux et les alkyl-étain.

Bien que la température et le temps de réacton ne soient pas critique, on préfère opérer à des températures variant entre environ 130° C et 240° C, et ajuster le temps de réaction entré 2 et 16 heures.

Les alcools dihydriques que l'on utilise de préference dans la préparation des polyols selon l'invention incluent l'éthylène glycol, le propylène glycol, le butylène glycol, le dipropylène glycol, le diéthylène glycol, le néopentyl glycol, l'hexane diol, etc.

Les alcools trihydriques sont de préference choisis parmi le triéthyloléthane, le triméthylolpropane, la triéthanolamine et le glycérol; l'alcool tétrahydrique préféré est le pentaérythritol.

La réaction du mélange d'acides d'esters ou d'anhydrides s'effectue dans une première la étape avec au moins un alcool polyhydroxylique où la fonction hydroxylique est peu disponible, suivie d'une deuxième étape où l'on ajoute au moins un alcool polyhydroxylique où la fonction hydroxylique est plus disponible. Par exemple, dans la première étape, on utilise au moins un alcool polyhydroxilique choisi dans le groupe constitué par des alcools secondaires, tertiaires et primaires fortement encombrés, et dans la deuxième étape on ajoute des alcools primaires peu encombrés.

Selon une réalisation préférée de l'invention, la préparation des polyols implique les étapes suivantes:

a) l'on introduit dans un réacteur un mélange d'acides comprenant environ 35 à 80% en poids d'acide glutarique, environ 15 à 35% en poids d'acide succinique et environ 8 à 35% en poids d'acide adipique, ou les esters ou anhydrides des acides, avec au moins un alcool polyhydroxylique choisi dans le groupe constitué par des alcools secondaires, des alcools tertiaires et des alcools primaires fortement encombrés, avec un catalyseur choisi dans le groupe constitué par les chlorures stanneux et stanniques et les alkyl-étain,

b) l'on purge le milieu réactionnel avec un gaz inerte,

c) l'on chauffe le milieu réactionnel tout en agitant, à une température n'excédant pas environ 225° C,

d) on élimine de 90 à 95 % de l'eau ou du méthanol formé à l'étape (c),

e) on introduit dans le réacteur au moins un alcool primaire peu encombré,

f) on chauffe à environ 225° C et élimine par distillation le maximum d'eau ou de méthanol,

g) on termine la réaction en faisant le vide dans le réacteur afin d'éliminer toute trace d'eau ou de méthanol dans le milieu réactionnel et l'on poursuit cette opération jusqu'à ce que le polyol obtenu ait une valeur acide inférieure à 3, une fonctionalité hydroxylique au moins égale à 2,0 et un nombre hydroxyle inférieur à 600.

Selon une réalisation préférée de l'invention, les alcools polyhydroxyliques sont choisis dans le groupe constitué par des alcools dihydriques, trihydriques et tétrahydriques, le rapport molaire entre l'alcool dihydrique et l'alcool trihydrique étant de 1 à 2:1, le rapport molaire entre l'alcool dihydrique et l'alcool tétrahydrique étant de 3 à 5:1.

Les mélanges d'acides peuvent être employés seuls ou en combinaison avec au moins un autre acide dicarboxylique ou son anhydride, tel que l'acide phtalique ou autres.

Il est reconnu que la durabilité, la dureté et la résistance aux intempéries des uréthannes à base de polyester polyols dépendent du pourcentage de réticulation de l'uréthanne qui est fonction de la structure moléculaire des polyesters polyols.

Il est bien connu que la préparation des polyuréthannes réticulés peut être faite à partir de polyols de fonctionalité élevée. C'est ainsi qu'une plus grande rigidité peut être obtenue en utilisant des polyols de fonctionalité supérieure à 2. Dans la préparation de mousses rigides d'uréthanne ainsi que d'élastomères rigides d'uréthanne de dureté minimale ce 60 (Shore D), l'utilisation de polyols de fonctionalité au moins 3 doit être envisagée.

C'est ainsi que les polyesters polyols préparés par le procédé de la présente invention servent à préparer des polyuréthannes sous forme de mousses et d'élastomères et particulièrement d'élastomères rigides d'une dureté Shore D entre 60 et 95 et préférablement entre 80 et 95.

Ces polyuréthannes peuvent être obtenus en faisant réagir les polyesters polyols de la présente invention avec des polyisocyanates d'origine soit aliphatique, soit aromatique. Parmi les polyisocyanates d'origine aliphatique, mentionnons les diisocyanates cycliques saturés tels que le diisocyanate d'isophorone. Parmi les polyisocyanates d'origine aromatique, mentionnons, les phényles-1,3 et 1,4 diisocyanates, le diphénylméthane-4,4'-diisocyanate, le triphénylméthane-4,4',4''-triisocyanate, le polyphényl-polyméthylènepolyisocyanate, etc.

Dans la préparation des polyuréthannes les polyisocyanates et les polyesters polyols sont présents dans des proportions respectives se situant de préférence entre 0,5 à 4:1 en poids.

La réaction entre les polyisocyanates et les nouveaux polyols peut être réalisée selon toutes méthodes conventionnelles telles que celles utilisées dans les procédés généralement connus sous les noms de "Hot Cast" et "Fast Cast" pour les élastomères et de "Spray Foam", "Moulding Foam" et "Froth Foam" pour les mousses.

Dans la préparation des polyuréthannes il est parfois nécessaire de contr*oler le degré de rigidité desdits polyuréthannes. Pour ce faire, on emploi généralement en combinaison avec le nouveau polyester polyol une quantité mineure d'un agent de réticulation de faible fonctionnalité tel qu'un polyéther polyol, e.g. le dipropylène éther glycol, ou une amine polyhydrique, e.g. la triéthanolamine.

On pourra de plus faire intervenir dans la réaction, des additifs conventionnellement utilisés dans la préparation de polyuréthannes. Parmi ces additifs mentionnons:

- des agents plastifiants tels que phtalate dioctylique, le phtalate butyl benzoylique, etc;
- des catalyseurs tels que les sels d'étain (exemple, le diacétate de dibutyl étain, l'acrylate stanneux, etc.);
- des agents ignifuges tels que l'alumine trihydratée, le phosphate de trichloroéthyle, le phosphate de diammonium, le dioxyde d'antimoine, etc;
- des surfactants tels des huiles silicones, des copolymères silicone - glycol, etc;
- des agents déshydratants tels que le monoisocyanate de toluène, les oxydes d'alumine, le chlorure de calcium, etc.

De plus, dans la préparation des mousses de polyuréthannes on utilisera également des agents moussants tels que l'air, les gaz inertes, l'eau, un FREON*, le chlorure de méthylène, etc., ou préférablement un mélange d'eau, de FREON* et de chlorure de méthylène.

Dans la préparation des élastomères on peut utiliser des agents de charge tels que le carbonate de calcium, la fibre de verre, le mica, la wollastonite, etc.

* Marque de Commerce de Dupont de Nemours

L'invention va maintenant être illustrée par les exemples qui suivent donnés simplement sans caractère limitatif.

**Exemple 1**

Le réacteur est constitué d'un ballon de 5000 ml à trois tubulures et comprend une source d'azote, une agitation mécanique, une colonne à distiller, un piège à eau et un réfrigérant. Introduire 1000 g (6,32 moles) d'ester dibasique, (DBE) 466 g (3,47 moles) de dipropylène glycol, 172 g (1,26 mole) de pentaérythritol, 1,2 g d'oxyde de dibutyl étain et 0,4 g de 2-éthylhexyltitanate. L'ester dibasique (DBE) est composé de 27 % en poids de diméthyl ester de l'acide succinique, de 59 % en poids de diméthyl ester de l'acide glutarique et de 14 % en poids de diméthyl ester de l'acide adipique. Tenir le milieu réactionnel sous atmosphère inerte (azote), agiter et commencer à chauffer. A environ 170°C, le méthanol commence à distiller. Continuer à chauffer jusqu'à ce que la température atteigne 200°C. Quand environ 90-95% du méthanol a été distillé, c'est-à-dire 135-145 g (170-180 ml), introduire dans l'ordre: 327 g (3,16 moles) de néopentyl glycol, 339 g (2,53 moles) de triméthylolpropane et 330 g (2,21 moles) de triéthanolamine. Continuer de chauffer afin d'éliminer le plus de méthanol possible, et lorsque la distillation cesse, placer le réacteur sous vide pour ainsi éliminer les dernières traces de méthanol et finaliser la réaction. Refroidir le réacteur jusqu'à 100°C avant de casser le vide et transvaser l'ester polyol (2 232 g) ainsi produit.

Cet ester a une fonctionnalité de 3,15, un nombre hydroxyle de 501 (calculé = 500) et une valeur acide de 1,0.

**Exemple 2**

Le réacteur est constitué d'un ballon à trois tubulures et comprend une source d'azote, un agitateur mécanique, une colonne à distiller, un piège à eau et un réfrigérant. Introduire dans le réacteur 9,8 parties en poids d'anhydride maléique, 14,8 parties en poids d'anhydride phtalique, 105,0 parties en poids d'acide dibasique (DBA) et 134,2 parties en poids de propylène glycol. L'acide dibasique est composé de 18 % en poids d'acide succinique, de 70% en poids d'acide glutarique et 12 % en poids d'acide adipique. Tenir le milieu réactionnel sous atmosphère inerte (azote), agiter et commencer à chauffer. A 100° C, ajouter à la solution 0,4 partie de 2-éthylhexyltitanate. A environ 170° C, l'eau commence à distiller. Continuer à chauffer jusqu'à ce que la température atteigne 200° C. Quand environ 90 % de l'eau a été distillée, c'est-à-dire 16,2 parties en poids, introduire dans le réacteur, 134,2 parties en poids de triméthylolpropane. Continuer de chauffer afin d'éliminer le plus d'eau possible et lorsque la distillation cesse, placer le réacteur sous vide pour ainsi éliminer les dernières traces d'eau et finaliser la réaction. Refroidir le réacteur jusqu'à 100° C avant de casser le vide et transvaser l'ester polyol ainsi produit.

Cet ester a une fonctionnalité de 3,0 un nombre hydroxyle de 420 et une valeur acide de 1,6.

**Exemple 3**

On répète l'exemple 2 en utilisant 158,35 g de DBE, 100,64 g de dipropylene glycol, 140,89 g de triméthylolpropane, 29,84 g de triéthanolamine, 0,18 g d'oxyde de dibutyl étain, 0,07 g de 2-éthyl hexyltitanate et 0,01 g d'un agent anti-moussant (Dow Corning anti-foam).

On obtient un ester polyol ayant une fonctionnalité de 3,25, un nombre hydroxyle de 492 et une valeur acide 1,95.

**Exemple 4**

On répète l'exemple 2, mais en utilisant 158,35 g de DBE, 236,18 g de 1,6-hexanediol; on obtient un ester polyol ayant une fonctionnalité de 2,0, un nombre hydroxyle de 334 et une valeur acide de 0,1.

**Exemple 5**

On répète l'exemple 2, mais en utilisant 243,49 g de DBE, 200 g de polyéthylène glycol, 134,18 g de triméthylolpropane. On obtient 339,44 g d'un ester polyol ayant une fonctionnalité de 3,0, un nombre hydroxyle de 368 et une valeur acide de 0,24.

**Exemple 6**

On répète l'exemple 2, mais en utilisant 126,7 g de DBE, 38,9 g de téréphtalate de diméthyl, 134,2 g de triméthylolpropane et 118,2 g de 1,6-hexanediol. On obtient 353,8 g d'un ester polyol ayant une fonctionnalité de 3,0, un nombre hydroxyle de 488 et une valeur acide de 1,6.

**Exemple 7**

Préparation d'une mousse de polyuréthanne.

Le polyester polyol de départ est celui obtenu par un procédé selon l'exemple 2, mais dont la formulation est la suivante:

| Réactifs | -OH mole | mole | Quantité de g/mole |
|---|---|---|---|
| Ester dibasique | -2,00 | 1,00 | 158,35 |
| Dipropylène glycol | 1,10 | 0,55 | 72,80 |
| Pentaérythritol | 0,80 | 0,20 | 27,23 |
| Triméthylolpropane | 1,20 | 0,40 | 53,67 |
| Néopentyl glycol | 1,00 | 0,50 | 52,08 |
| Triéthanolamine | 1,05 | 0,35 | 52,22 |
| 2-éthyl hexyltitanate | - | - | 0,07 |
| Dibutyltinoxyde | - | - | 0,19 |
| D.C. antifoam A * | - | - | 0,006 |
| Perte méthanol | - | -2,00 | -64,08 |
| | 3,15 | | 352,536 |

* Marque de Commerce de "Dow Corning": ceci est un silicone ayant un poids moléculaire utilisé comme agent anti-moussant

Ce polyol contient une valeur acide de moins de 3 et une quantité d'hydroxyles de 500. Ce polyol fut polymérisé entre 120° C et 205° C.

La mousse de polyuréthanne est préparée à partir du polyester polyol obtenu ci-dessus, et d'un polyisocyanate, le tout de façon conventionnelle selon la formulation suivante:

| Composante B | % en poids |
|---|---|
| Polyester polyol | 73 |
| Silicone | 0,7 |
| 5 Amine tertiaire | 0,75 |
| Eau | 0,5 |
| FREON* II (fluoro chloroéthane) | 25 |
| | 100 |

Composante A

Polyméthylène polyisocyanate 104,6 parties/100 parties de la composante

Cette mousse a une densité de 31 kg/m$^3$.

**Exemple 8**

On prépare une mousse de polyuréthanne selon la méthode décrite à l'exemple 7, mais en utilisant comme polyol de départ, le produit préparé selon l'EXEMPLE 3. On obtient une mousse d'une densité de 26,6 kg/m$^3$.

**Exemple 9**

On prépare une mousse de polyuréthanne selon la méthode décrite à l'exemple 7, mais en utilisant comme polyol de départ, le produit préparé selon l'EXEMPLE 4. On obtient une mousse d'une densité de 33,9 kg/m$^3$.

**Exemple 10**

On prépare une mousse de polyuréthanne selon la méthode décrite à l'exemple 7, mais en utilisant comme polyol de départ, le produit préparé selon l'EXEMPLE 5. On obtient une mousse d'une densité de 23,7 kg/m$^3$.

**Exemple 11**

On prépare une mousse de polyuréthanne selon la méthode décrite à l'exemple 7, mais en utilisant comme polyol de départ, le produit préparé selon l'EXEMPLE 2. On obtient une mousse d'une densité de 83,4 kg/$^3$m.

**Exemple 12**

On prépare une mousse de polyuréthanne selon la méthode décrite à l'exemple 7, mais en utilisant comme polyol de départ, le produit préparé selon l'EXEMPLE 6. On obtient une mousse d'une densité de 25,3 kg/$m^3$.

**Exemple 13**

On prépare un élastomère rigide de polyuréthanne en utilisant comme polyol de départ, le produit préparé à l'EXEMPLE 7. Le polyuréthanne est préparé de façon conventionnelle selon la formulation suivante:

| <u>Composante B</u> | % par poids |
|---|---|
| Polyester polyol | 59,8 |
| Polypropylène éther glycol | 19,9 |
| Dioctyl phtalate | 19,9 |
| Sel d'étain | 0,05 |
| Silicone | 0,35 |
| | 100,00 |

<u>Composante A</u>
Polyméthylène polyisocyanate 86,48 parties/parties de la composante B
Le polyuréthanne élastomère obtenu a une dureté Shore D 87.

**Exemple 14**

On prépare un élastomère rigide de polyuréthanne en utilisant comme polyol de départ, le produit préparé à l'exemple 7. Le polyuréthanne est préparé de façon conventionnelle selon la formulation suivante:

| <u>Composante B</u> | % par poids |
|---|---|
| Polyester polyol (exemple 7) | 99,6 |
| Sel d'étain | ,05 |
| Silicone | ,35 |
| | 100,00 |

<u>Composante A</u>
Polyméthylène polyisocyanate 119 parties pour/100 parties de la composante B
Le polyuréthanne élastomère obtenu a une dureté Shore D 92.

**Exemple 15**

On prépare une mousse polyuréthanne rigide en utilisant comme polyol de départ, le produit préparé à l'exemple 7. Le polyuréthanne est préparé en agitant vigoureusement les composantes A et B.

<u>Composante B</u>
Polyester polyol (exemple 7) 100 parties par poids

<u>Composante A</u>
Polyéthylène polyisocyanate 135 parties par poids pour 100 parties de la composante B
La mousse polyuréthanne obtenue a une densité de 487 kg/$m^3$.

**Exemple 16**

On prépare une mousse polyuréthanne rigide en utilisant comme polyol de départ, le produit préparé à l'exemple 7. Le polyuréthanne est préparé en agitant vigoureusement les composantes A et B.

Composante B

| | |
|---|---|
| Polyester polyol (exemple 7) | 100 parties par poids |
| FREON II* | 2 parties par poids |
| | 102 |

Composante A
Polyméthylène polyisocyanate 135 parties par poids pour 102 parties de la composante B
La mousse polyuréthanne obtenue a une densité de 155 kg/$m^3$.

**Exemple 17**

Le réacteur est constitué d'un réservoir en acier inoxydable de 50 litres, comprenant deux sources d'azote, un agitateur mécanique, une colonne à distillation paqueté à l'aide de filtres en fils d'acier inoxydable, un piège à eau et un condensateur. Le réacteur est chauffé à l'aide d'une chemise électrique chauffante et est refroidi à l'eau circulant dans un serpentin à l'intérieur du réservoir. Introduire dans le réacteur 10,596 g d'acide dibasique (DBA), 8,340 g de dipropylène glycol, 4,389 g de triméthylolpropane, 15 g de dibutyl d'oxyde d'étain et 6 g d'éthyl hexyltitanate. L'acide dibasique est composé de 15 % en poids d'acide succinique, 77 % en poids d'acide glutarique et 8 % en poids d'acide adipique. Tenir le milieu réactionnel sous atmosphère inerte (azote), agiter et commencer à chauffer. A environ 170°C, l'eau commence à distiller et la température est contr*olée en formant une solution azéotropique comprenant la résine en polymérisation et un faible pourcentage de toluène. La concentration en poids maximale de toluène dans la résine est d'environ 2,5 %. Cette distillation améliore le transport des molécules d'eau à travers le condensateur et ainsi accélère la polymérisation. Continuer à chauffer jusqu'à ce que la température atteigne 180°C. Quand environ 90 % de l'eau a été distillée, c'est-à-dire 1630 g, refroidir le polymère jusqu'à 110°C et introduire dans le réacteur 7130 g de triméthylolpropane et 2440 g de triéthanol amine. Commencer à chauffer, ainsi la distillation recommence à 170°C. Continuer à chauffer jusqu'à ce que la température atteigne 195°C. Quand environ 95 % de l'eau a été distillée, c'est-à-dire environ 2910 g, on débute les titrations de la valeur acide du polyol et les mesures de viscosité Gardner. Ces valeurs acides sont mesurées à des intervalles de 30 minutes jusqu'à l'obtention d'une valeur maximale de 2,0. Ensuite placer le réacteur sous vide afin d'éliminer le toluène. Mesurer le nombre d'hydroxyle, si celui-ci ne correspond pas avec les spécifications du polyol, il faudrait faire une addition de glycol ou d'acide dépendant des résultats de contr*ole de qualité afin d'obtenir les spécifications déterminées du polyester polyol. Ensuite, refroidir le polyol jusqu'à 180°C, casser le vide et le transvider. Cet ester a une fonctionnalité de 3,25, un nombre d'hydroxyles de 507, une valeur acide de 1,3 et une viscosité Brookfield de 9700 centipoises mesurée à 25°C sur modèle RVF, 5 spindle No 4 à la vitesse de 20 rpm.

**Exemple 18**

Le réacteur est constitué d'un réservoir inoxydable comprenant deux sources d'azote, un agitateur mécanique, une colonne à distillation paquetée à l'aide de filtres en fils d'acier inoxydable, un piège à eau et un condensateur. Le réacteur est chauffé à l'aide d'une chemise chauffante électrique et est refroidi à l'eau circulant dans un serpentin à l'intérieur du réservoir. Introduire dans le réacteur 10,596 g d'acide dibasique (DBA), 8,340 g de dipropylène glycol, de 4,389 g de triméthylol propane, 15 g de dibutyl d'oxyde d'étain et 6 g d'éthyl héxyltitanate. L'acide dibasique est composé de 25 % en poids d'acide succinique, de 50 % en poids d'acide glutarique et 25 % en poids d'acide adipique. Tenir le milieu réactionnel sous atmosphère d'azote, agiter et commencer à chauffer. A environ 170°C, l'eau commence à distiller et la température est contr*olée en formant une solution azéotropique comprenant la résine en polymérisation et un faible pourcentage de toluène. La concentration en poids maximale de toluène dans la résine est d'environ 2,5 %. Cette distillation améliore le transport des molécules d'eau à travers le condensateur et ainsi accélère la polymérisation. Continuer à chauffer jusqu'à ce que la température atteigne 180°C. Quand environ 90 % de l'eau a été distillée, c'est-à-dire 1630 g, refroidir le polymère jusqu'à 110°C et introduire dans le réacteur 7130 g de triméthylol propane et 2440 g de triéthanol amine. Commencer à chauffer jusqu'à ce que la température atteigne 185°C. Quand environ 95 % de l'eau a été distillée, c'est-à-dire environ 2910 g, on débute les titrations de la valeur acide du polyol et les mesures de viscosité Gardner. Ces valeurs acides sont mesurées à des intervalles de 30 minutes jusqu'à l'obtention d'une valeur maximale de 2,0. Ensuite placer le réacteur sous vide afin d'éliminer le

toluène. Mesurer le nombre d'hydroxyles, si celui-ci ne correspond pas avec les spécifications du polyol, il faudrait faire une addition de glycol ou d'acide dépendant des résultats de contr*ole de qualité afin d'obtenir les spécifications déterminées du polyester polyol. M suite refroidir le polyol jusqu'à 80°C, casser le vide et le transvider.

Cet ester a une fonctionnalité de 3,25, un nombre d'hydroxyles de 500, une valeur acide 1,3 et une viscosité Brookfield de 9800 centipoises mesurée de la même façon qu'à l'exemple 17.

## Revendications

1. Procédé de préparation de polyols à l'aide d'un mélange comprenant environ 35 à 80 % en poids d'acide glutarique, environ 15 à 35 % en poids d'acide succinique et envron 8 à 35 % en poids d'acide adipique ou les esters ou anhydrides de ces acides, caractérisé en ce que ledit mélange d'acides, d'esters ou d'anhydrides, est mis en réaction dans une première étape avec au moins un alcool polyhydroxylique où la fonction hydroxy est peu disponible, suivie d'une deuxième étape où l'on ajoute au moins un alcool polyhydroxylique où la fonction hydroxy est plus disponible, de façon à ce que les polyols obtenus aient une valeur acide inférieure à 3, une fonctionnalité hydroxylique au moins égale à 2,0 et un nombre hydroxyle inférieur à 600.

2. Procédé selon la revendication 1, caractérisé en ce que dans la première étape, on utilise au moins un alcool polyhydroxylique choisi dans le groupe constitué par les alcools secondaires, tertiaires et primaires fortement encombrés.

3. Procédé selon la revendication 1, caractérisé en ce que ladite première étape comprend:

a) l'introduction dans un réacteur d'un mélange d'acides comprenant environ 35 à 80 % en poids d'acide glutarique, environ 15 à 35 % en poids d'acide succinique et environ 8 à 35 % en poids d'acide adipique ou les esters ou anhydrides de ces acides, avec au moins un alcool polyhydroxylique choisi dans le groupe constitué par des alcools secondaires, ddes alcools tertiaires et des alcools encombrés, avec un catalyseur choisi dans le groupe constitué par les chlorures stanneux et stanniques et les alkyl-étain,

b) la purge du milieu réactionnel avec un gaz inerte,

c) le chauffage du milieu réactionnel sous agitation à une température n'excédant pas environ 225°C,

d) l'élimination de 90 à 95 % de l'eau ou du méthanol formé lors du chauffage ci-dessus, et en ce que ladite deuxième étape comprend:

e) l'introduction dans le réacteur d'au moins un alcool primaire peu encombré,

f) le chauffage à environ 225°C et l'élimination par distillation du maximum d'eau ou de méthanol,

g) la terminaison de la réaction en faisant le vide dans le réacteur afin d'éliminer toute trace d'eau ou de méthanol du milieu réactionnel et la poursuite de cette opération jusqu'à ce que le polyol obtenu ait une valeur acide inférieure à 3, une fonctionnalité hydroxylique au moins égale à 2,0 et un nombre hydroxyle inférieur à 600.

4. Procédé selon l'une quelconque des revendications 1 à 3, caractérisé en ce que les alcools polyhydroxyliques sont choisis parmi les alcools dihydriques, trihydriques et tétrahydriques, le rapport molaire entre l'alcool dihydrique et l'alcool trihydrique étant de 1 à 2:1, le rapport molaire entre l'alcool dihydrique et l'alcool tétrahydrique étant de 3 à 5:1.

## Patentansprüche

1. Verfahren zur Herstellung von Polyolen mit Hilfe eines Gemisches, das erwa 35 bis 80 Gewichtsprozent Glutarsäure, etwa 15 bis 35 Gewichtsprozent Bernsteinsäure und etwa 8 bis 35 Gewichtsprozent Adipinsäure oder die Ester oder Anhydride dieser Säuren enthält, dadurch gekennzeichnet, daß das Gemisch der Säuren, Ester oder Anhydride in einer ersten Stufe mit mindestens einem Alkohol mit mehreren Hydroxyl gruppen, worin die Hydroxylfunktion wenig verfügbar ist, und anschließend in einer zweiten Stufe, wo man mindestens einen Alkohol mit mehreren Hydroxylgruppen zufügt, worin die Hydroxylfunktion leichter verfügbar ist, so umgegetzt wird, daß die erhaltenen Polyole einen Säurewert unter 3, eine Hydroxyl-Wertigkeit mindestens gleich 2,0 und eine Hydroxylzahl unter 600 aufweisen.

2. Verfahren nach Anspruch 1, dadurch gekennzeichnet, daß man in der ersten Stufe mindestens einen Alkohol mit mehreren Hydroxylgruppen verwendet, der ausgewählt ist aus der Gruppe sekundäre, tertiäre und stark sterisch behinderte primäre Alkohole.

3. Verfahren nach Anspruch 1, dadurch gekennzeichnet, daß die erste Stufe folgende Schritte umfaßt:

a) In ein Reaktionsgefäß wird ein Gemisch von Säuren, das etwa 35 bis 80 Gewichtsprozent Glutarsäure, etwa 15 bis 35 Gewichtsprozent Bernsteinsäure und etwa 8 bis 35 Gewichtsprozent Adipinsäure oder die Ester oder Anhydride dieser Säuren enthält, mit mindestens einem Alkohol mit mehreren Hydroxylgruppen, der ausgewählt ist aus der Gruppe sekundäre, tertiäre und sterisch behinderte Alkohole, mit einem Katalysator, der ausgewählt ist aus der Gruppe Zinn-(II)- und Zinn(IV)-Chloride und Alkylzinnverbindungen, gegeben;

b) das Reaktionsmilieu wird mit einem Inertgas gespült;

c) das Reaktionsgemisch wird unter Rühren auf eine Temperatur nicht über etwa 225°C erwärmt;

d) 90 bis 95 % des beim erwähnten Erwärmen gebildeten Wassers oder Methanols werden abgetrennt, und daß die zweite Stufe folgende Schritte aufweist:

e) in das Reaktionsgefäß wird mindestens ein sterisch gering behinderter primärer Alkohol gegeben;

f) es wird auf etwa 225° C erhitzt, und das Wasser oder Methanol wird möglichst weitgehend abdestilliert;

g) die Reaktion wird zu Ende geführt, indem man im Reaktionsgefäß ein Vakuum erzeugt, um jede Spur von Wasser oder Methanol aus der Reaktionsmischung zu entfernen, und diesen Arbeitsgang fortsetzt, bis das erhaltene Polyol einen Säurewert unter 3, eine Hydroxyl-Wertigkeit von mindestens 2,0 und eine Hydroxylzahl unter 600 aufweist.

4. Verfahren nach einem der Ansprüche 1 bis 3, dadurch gekennzeichnet, daß die mehrere Hydroxylgruppen aufweisenden Alkohole ausgewählt sind aus den zweiwertigen, dreiwertigen und vierwertigen Alkoholen, wobei das molare Verhältnis zwischen dem zweiwertigen Alkohol und dem dreiwertigen Alkohol bei 1 bis 2:1 und das molare Verhältnis zwischem dem zweiwertigen Alkohol und dem vierwertigen Alkohol bei 3 bis 5:1 liegt.

**Claims**

1. A process for the preparation of polyols by means or a mixture comprising about 35 to 80 % by weight of glutaric acid, about 15 to 35 % by weight of succinic acid and about 8 to 35 % by weight or adipic acid or the esters or anhydrides of said acids, characterised in that said mixture of acids, esters or anhydrides is reacted in a first step with at least one polyhydroxyl alcohol in which the hydroxy function is substantially hindered, followed by a second step involving adding at least one polyhydroxyl alcohol in which the hydroxy function is less hindered, in such a way that the polyols produced have an acid value of less than 3, a hydroxyl functionality which is at least equal to 2.0 and a hydroxyl number which is lower than 600.

2. A process according to claim 1 characterised in that the first step comprises using at least one polyhydroxyl alcohol selected from the group formed by substantially hindered primary, secondary and tertiary alcohols.

3. A process according to claim 1 characterised in that said first step comprises:

a) introducing into a reactor a mixture of acids comprising about 35 to 80 % by weight of glutaric acid, about 15 to 35 % by weight of succinic acid and about 8 to 35 % by weight of adipic acid or the esters or anhydrides of said acids, with at least one polyhydroxyl alcohol selected from the group formed by secondary alcohols, tertiary alcohols and hindered alcohols, with a catalyst selected from the group formed by stannous and stannic chlorides and alkyl-tins,

b) purging the reaction medium with an inert gas,

c) heating the reaction medium with agitation at a temperature not exceeding about 225° C,

d) eliminating 90 to 95 % of the water or the methanol formed in the above heating operation, and that said second step comprises:

e) introducing into the reactor at least one substantially unobstructed primary alcohol,

f) heating at ahout 2250C and removal by distillation of the maximum of water or methanol, and

g) terminating the reaction by producing a vacuum in the reactor in order to eliminate any trace of water or methanol from the reaction medium and continuing said operation until the polyol produced has an acid value uf less than 3, a hydroxyl functionality which is at least equal to 2.0 and a hydroxyl number which is lower than 600.

4. A process according to any one of claims 1 to 3 characterised in that the polyhydroxyl alcohols are selected frum dihydric, trihydric and tetrahydric alcohols, the molar ratio between the dihydric alcohol and the trihydric alcohol being 1 to 2:1, the molar ratio between the dihydric alcohol and the tetrahydric alcohol being 3 to 5:1.